# EUROPÄISCHE PATENTANMELDUNG

(11) **EP 1 270 315 A2**
(43) Veröffentlichungstag der Anmeldung: **02.01.2003**
(21) Anmeldenummer: 02012698.3
(22) Anmeldetag: 07.06.2002
(51) Int. Cl.: B60N 2/015

(54) **Fahrzeugsitz mit Bodenstellung**

(30) Priorität: 26.06.2001 DE 10130813
(71) Anmelder: Keiper GmbH & Co., 67657 Kaiserslautern (DE)
(72) Erfinder: Roth, Michael, 66887 Rammelsbach (DE); Schehl, Stefan, 66994 Dahn (DE); Brack, Steffen, 67678 Mehlingen (DE); Nasshan, Jürgen, 67655 Kaiserslautern (DE)
(74) Vertreter: Patentanwälte Hosenthien-Held und Dr. Held

(57) **Zusammenfassung**

1. Fahrzeugsitz mit Bodenstellung
2. Bei einem Fahrzeugsitz, insbesondere einem Kraftfahrzeugsitz, mit einem gelenkigen Sitzgestell (3) und einer Lehnenstruktur (7), der unter Bewegung des Sitzgestells (3) und/oder der Lehnenstruktur (7) von einer Sitzstellung in eine Tischstellung und/oder eine Bodenstellung überführbar ist, wobei das Sitzgestell (3) einen vorderen Fußbereich (15, 17) und wenigstens eine Diagonalstrebe (31) aufweist, ist die Diagonalstrebe (31) lösbar mit dem vorderen Fußbereich (15, 17) verriegelt.

## Beschreibung

Die Erfindung betrifft einen Fahrzeugsitz, insbesondere einen Kraftfahrzeugsitz, mit den Merkmalen des Oberbegriffs des Anspruches 1.

Bei einem bekannten Fahrzeugsitz dieser Art wird für eine Tischstellung die Lehnenstruktur so auf das Sitzgestell geklappt, daß die Rückseite der Rückenlehne horizontal ausgerichtet ist. Reicht diese Vergrößerung der Ladefläche nicht aus, kann der Fahrzeugsitz als Ganzes ausgebaut werden. Ein solcher Fahrzeugsitz läßt in der Praxis noch Wünsche offen.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, daß die Diagonalstrebe lösbar mit dem vorderen Fußbereich verriegelt ist, d.h. eine lösbare Verriegelungsvorrichtung vorgesehen ist, welche die Diagonalstrebe und den vorderen Fußbereich miteinander verriegelt, kann auf einfache Weise die Form des Sitzgestells und damit die Stellung des Fahrzeugsitzes geändert werden. Vorzugsweise hält die verriegelte Diagonalstrebe das Sitzgestell formstabil, während bei entriegelter Diagonalstrebe das beispielsweise als Viergelenk ausgebildete Sitzgestell zusammenfaltbar ist, insbesondere flach faltbar ist. Mit einer solchen Bodenstellung muß der Fahrzeugsitz nicht mehr ausgebaut werden, um die Ladefläche zu vergrößern. Der vordere Fußbereich weist vorzugsweise eine Führung für eine kontrollierte Bewegung der Diagonalstrebe auf. In der Regel ist für eine symmetrische Kräfteverteilung auf jeder Seite des Fahrzeugsitzes eine Diagonalstrebe vorgesehen ist, wobei die beiden Diagonalstreben aus Stabilitätsgründen durch wenigstens eine gemeinsame, horizontale Traverse miteinander verbunden sind.

In einer bevorzugten Ausführung ist im vorderen Fußbereich zum Verriegeln der Diagonalstrebe ein Sperrhaken vorgesehen, welcher einen Bolzen und/oder eine Traverse der Diagonalstrebe wenigstens teilweise umgreift, vorzugsweise formschlüssig. Dieser Bolzen oder diese Traverse bildet vorzugsweise zugleich dasjenige Bauteil, welches in der für die Diagonalstrebe vorgesehenen Führung des vorderen Fußbereichs geführt ist. Der beispielsweise schwenkbar ausgebildete und federbelastete Sperrhaken ist beispielsweise manuell über verschiedene Entriegelungselemente, wie Handschlaufen, schwenkbare Hebel oder Wellen, vom Bolzen bzw. der Traverse entfernbar.

Die Erfindung ist insbesondere für hintere Sitzreihen eines sogenannten Vans vorteilhaft. Durch die flache, in der Regel versenkte Bodenstellung kann die Ladefläche des Vans stark vergrößert werden, ohne daß der Fahrzeugsitz ausgebaut werden muß. Mit der erfindungsgemäßen Ausgestaltung steht eine einfache Bedienung zur Verfügung. Die Erfindung kann aber auch für andere Fahrzeuge verwendet werden.

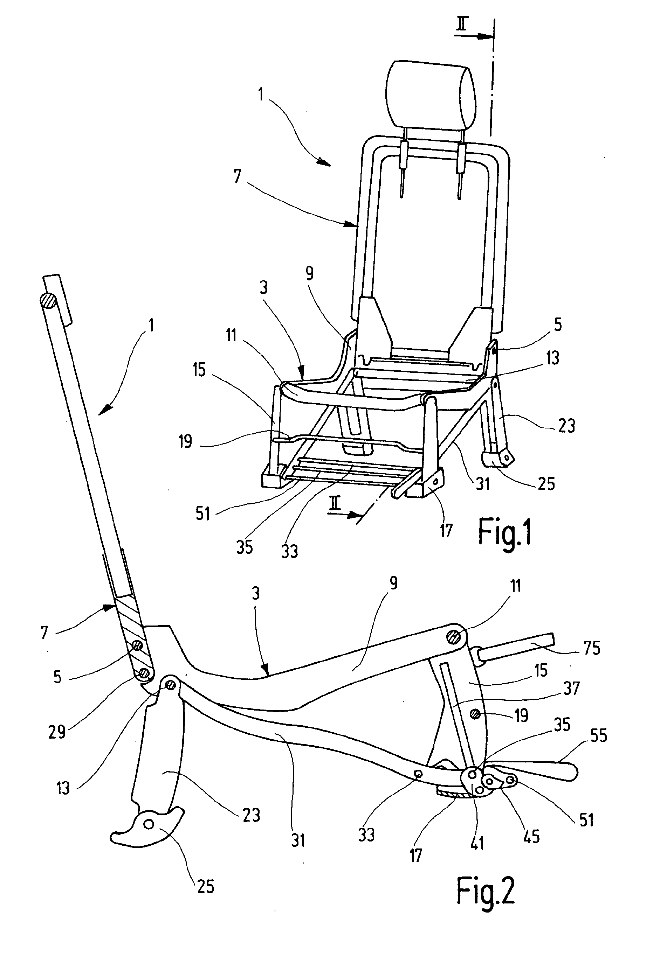

Im folgenden ist die Erfindung anhand eines in der Zeichnung dargestellten Ausführungsbeispiels näher erläutert. Es zeigen
- Fig. 1: eine perspektivische Ansicht der Struktur des Ausführungsbeispiels,
- Fig. 2: einen Schnitt entlang der Linie II-II in Fig. 1 durch das Ausführungsbeispiel in der Sitzstellung,

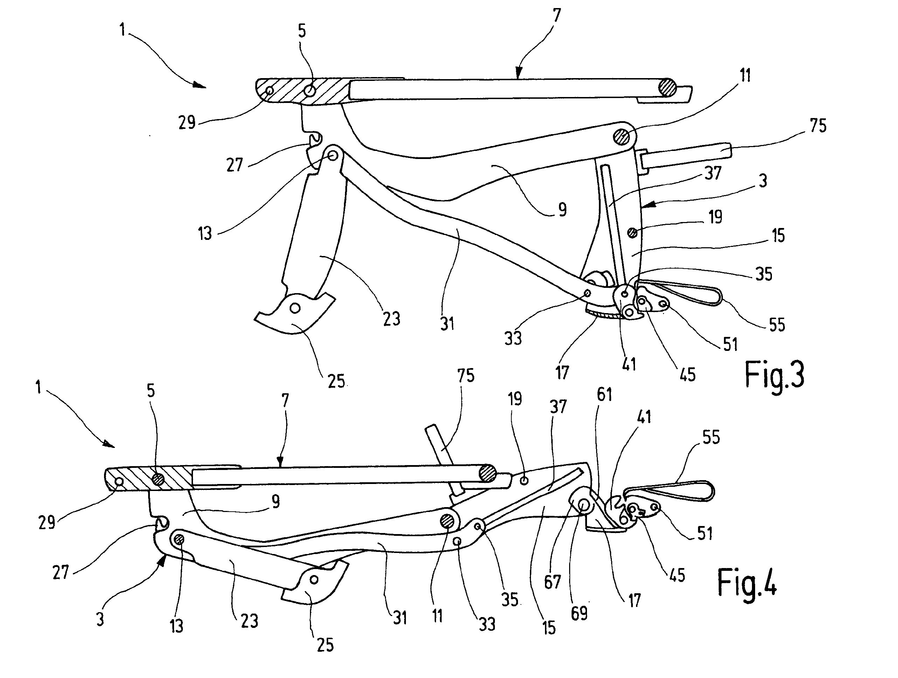

- Fig. 3: eine Darstellung entsprechend Fig. 2 in der Tischstellung,
- Fig. 4: eine Darstellung entsprechend Fig. 2 in der Bodenstellung,

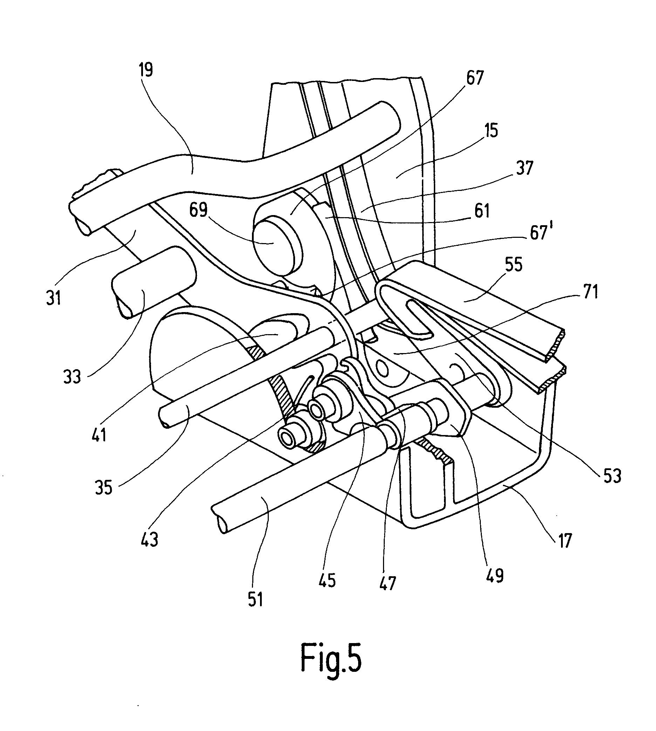

- Fig. 5: eine perspektivische, teilweise geschnitten dargestellte Ansicht des vorderen Fußbereichs in der Sitzstellung und der Tischstellung, und

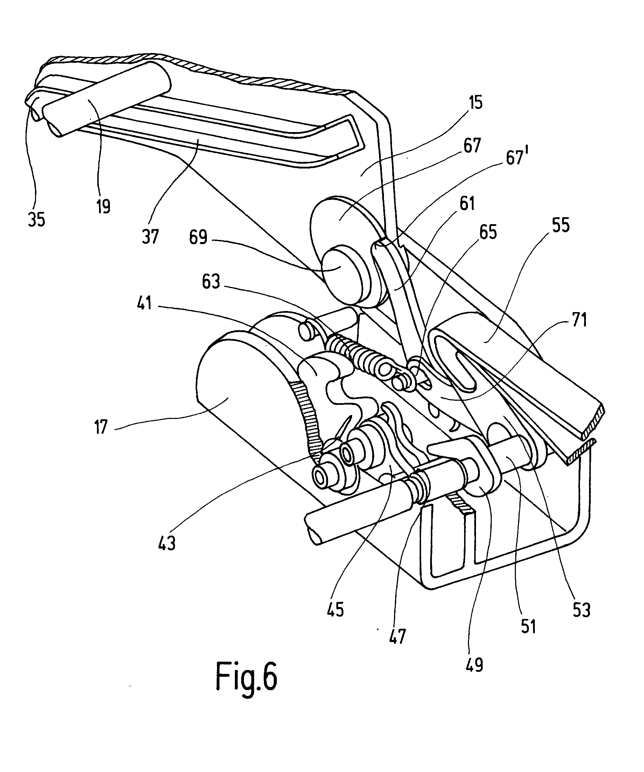

- Fig. 6: eine Darstellung entsprechend Fig. 5 in der Bodenstellung.

Ein Fahrzeugsitz 1 ist als Kraftfahrzeug-Rücksitz, vorzugsweise für eine dritte Sitzreihe eines sogenannten Vans, ausgebildet. Der Fahrzeugsitz 1 weist ein Sitzgestell 3 als Sitzteilstruktur auf, an welchem mittels zweier miteinander fluchtender Lehnenschwenkbolzen 5 eine Lehnenstruktur 7 einer Rückenlehne angelenkt ist. Das Sitzgestell 3 trägt auf an sich bekannte Weise ein nicht näher dargestelltes Sitzkissen. Bezüglich der Fahrtrichtung auf der linken und auf der rechten Seite weist das Sitzgestell 3 je ein Sitzrahmen-Seitenteil 9 auf, in welchem jeweils einer der Lehnenschwenkbolzen 5 gelagert ist. Die beiden Sitzrahmen-Seitenteile 9 sind in ihrem vorderen Bereich durch eine vordere Sitzrahmen-Quertraverse 11 und in ihrem hinteren Bereich durch eine hintere Sitzrahmen-Quertraverse 13 unter Bildung eines Sitzrahmens fest miteinander verbunden. Nachfolgend ist zunächst die Sitzstellung des Fahrzeugsitzes 1 beschrieben.

Auf beiden Seiten der vorderen Sitzrahmen-Quertraverse 11 ist je eine vordere Schwinge 15 mit ihrem oberen Ende angelenkt, welche mit ihrem unteren Ende an einem fahrzeugstrukturfesten, vorderen Lagerbock 17 angelenkt ist. Die vordere Schwinge 15 und der vordere Lagerbock 17 bilden einen vorderen Fußbereich des Sitzgestells 3. Die beiden vorderen Schwingen 15 sind durch eine Schwingen-Quertraverse 19 fest miteinander verbunden. Im hinteren Bereich jedes Sitzrahmen-Seitenteils 9 ist an der hinteren Sitzrahmen-Quertraverse 13 eine hintere Schwinge 23 mit ihrem oberen Ende angelenkt, welche mit ihrem unteren Ende an einem fahrzeugstrukturfesten, hinteren Lagerbock 25 angelenkt ist. An den Sitzrahmen-Seitenteilen 9 sind im Bereich zwischen dem jeweiligen Lehnenschwenkbolzen 5 und der hinteren Sitzrahmen-Quertraverse 13 jeweils Lehnenverriegelungen 27 angebracht, welche lehnenstrukturfeste Lehnenverriegelungsbolzen 29 mittels Haken verriegeln.

An der hinteren Sitzrahmen-Quertraverse 13 ist auch jeweils eine Diagonalstrebe 31 mit ihrem hinteren Ende angelenkt. Die beiden Diagonalstreben 31 sind im Bereich ihres vorderen Endes durch eine lastaufnehmende Diagonalstreben-Quertraverse 33 und durch eine vorzugsweise als Stange ausgebildete Verriegelungstraverse 35 miteinander verbunden. Die Verriegelungstraverse 35 ist auf eine nachfolgend näher beschriebene Weise mit dem vorderen Lagerbock 17 verriegelt. Jedes Ende der Verriegelungstraverse 35 ist jeweils innerhalb einer Führung 37 der zugeordneten vorderen Schwinge 15 angeordnet. Die fest mit der vorderen Schwinge 15 verbundene Führung 37 ist mit einem U-förmigen Profil ausgebildet und läuft entlang der vorderen Schwinge 15 senkrecht zur Verriegelungstraverse 35.

In jedem vorderen Lagerbock 17 ist als Verriegelungsvorrichtung ein Sperrhaken 41 schwenkbar gelagert, welcher durch Beaufschlagung mit einer Schenkelfeder 43 die Verriegelungstraverse 35 wenigstens teilweise umgreift und formschlüssig verriegelt. Im vorderen Lagerbock 17 ist mit paralleler Schwenkachse zum Sperrhaken 41 ferner ein Nocken 45 gelagert, von welchem ein Mitnehmerbolzen 47 seitlich absteht. Der Mitnehmerbolzen 47 wird von einer Mitnehmerklammer 49 umgriffen, welche drehfest auf einer als Stange ausgebildeten Entriegelungstraverse 51 sitzt. Die Entriegelungstraverse 51 ist an jedem ihrer beiden Enden drehbar in einem der vorderen Lagerböcke 17 gelagert. Auf der Entriegelungstraverse 51 sitzt an einem Ende drehfest ein Entriegelungshebel 53, welcher mit einer manuell ergreifbaren Entriegelungsschlaufe 55 versehen ist.

In jedem vorderen Lagerbock 17 ist ferner ein länglicher Riegel 61 schwenkbar gelagert. Eine Zugfeder 63, welche an einem seitlich vom Riegel 61 abstehenden Zapfen 65 angreift, spannt den Riegel 61 zu einer Steuerscheibe 67 hin vor. Die Steuerscheibe 67 sitzt bezüglich der vorderen Schwinge 15 drehfest auf einem Schwingenlagerbolzen 69, welcher die Anlenkstelle der vorderen Schwinge 15 am vorderen Lagerbock 17 bildet. Ein Verbindungshebel 71, welcher an einem Ende mittels eines Langlochs den Zapfen 65 ümschließt, ist mit seinem anderen Ende am Entriegelungshebel 53 angelenkt.

Der Fahrzeugsitz 1 kann außer der vorstehend beschriebenen Sitzstellung noch weitere Stellungen einnehmen. Für den Übergang in die sogenannte Tischstellung werden die Lehnenverriegelungen 27 entriegelt, so daß die Lehnenverriegelungsbolzen 29 freigegeben werden. Die Lehnenstruktur 7 kann dann um die Lehnenschwenkbolzen 5 nach vorne in eine wenigstens näherungsweise horizontale Stellung geklappt werden. Die Rückseite der Rückenlehne dient dann als Ladefläche. In beiden genannten Stellungen wird das Sitzgestell 3 durch die Verriegelung der Verriegelungstraverse 35 der Diagonalstreben 31 formstabil, also unbeweglich, gehalten. Durch die gewählte Anordnung der Diagonalstreben 31 schräg nach vorne und unten werden im Crashfall die auf die Rückenlehne wirkenden Kräfte in die Fahrzeugstruktur eingeleitet.

Für den Übergang in die Bodenstellung oder Flat-Floor-Position wird ausgehend von der Tischstellung an der Entriegelungsschlaufe 55 von Hand gezogen. Über den Entriegelungshebel 53 wird die Entriegelungstraverse 51 gedreht, welche über die Mitnehmerklammer 49 den Mitnehmerbolzen 47 bewegt. Dadurch wird der Nocken 45 geschwenkt, welcher so gegen den Sperrhaken 41 drückt, daß dieser entgegen der Kraft der Schenkelfeder 43 nach hinten und unten schwenkt und dadurch die Verriegelungstraverse 35 freigibt. Das Sitzgestell 3 kann nun als Viergelenk flach nach hinten gefaltet werden. Dabei gleiten die Enden der Verriegelungstraverse 35, welche stirnseitig in den Führungen 37 der vorderen Schwingen 15 angeordnet und geführt sind, entlang diesen Führungen, wodurch die Faltbewegung des Sitzgestells 3 geführt ist. Die Steuerscheibe 67 stützt sich mit einem Absatz 67' auf dem Riegel 61 ab, sobald die Bodenstellung erreicht ist. Die Steuerscheibe 67 wird auf diese Weise festgelegt. In der Bodenstellung ist der Fahrzeugsitz 1 so in einer Bodenversenkung verstaut, daß eine vergrößerte Ladefläche zur Verfügung steht.

Für die Rückkehr von der Bodenstellung in die Tischstellung des Fahrzeugsitzes 1 wird zunächst über die Entriegelungsschlaufe 55, den Entriegelungshebel 53 und den Verbindungshebel 71 der Riegel 61 zurückgeschwenkt, so daß der Riegel 61 die Steuerscheibe 67 freigibt. Dann wird durch eine Hochziehschlaufe 75, welche an einer vorderen Schwinge 15 angebracht ist, das Sitzgestell 3 hochgezogen. Dabei gleiten die Enden der Verriegelungstraverse 35 zur Steuerung der Bewegung des Sitzgestells 3 wieder den Führungen 37 der vorderen Schwingen 15 entlang. Die mit einer Anlaufschräge versehenen Sperrhaken 41 umgreifen die Verriegelungstraverse 35, sobald diese das in den vorderen Lagerböcken 17 gelegene, untere Ende der Führungen 37 erreicht hat. Die Tischstellung ist damit wieder erreicht. Zum Übergang in die Sitzstellung wird die Lehnenstruktur 7 nach oben geklappt, bis die Lehnenverriegelungsbolzen 29 in die Lehnenverriegelung 27 einfallen.

### Bezugszeichenliste

- 1: Fahrzeugsitz
- 3: Sitzgestell
- 5: Lehnenschwenkbolzen
- 7: Lehnenstruktur
- 9: Sitzrahmen-Seitenteil
- 11: vordere Sitzrahmen-Quertraverse
- 13: hintere Sitzrahmen-Quertraverse
- 15: vordere Schwinge
- 17: vorderer Lagerbock
- 19: Schwingen-Quertraverse
- 23: hintere Schwinge
- 25: hinterer Lagerbock
- 27: Lehnenverriegelung
- 29: Lehnenverriegelungsbolzen
- 31: Diagonalstrebe
- 33: Diagonalstreben-Quertraverse
- 35: Verriegelungstraverse
- 37: Führung
- 41: Sperrhaken
- 43: Schenkelfeder
- 45: Nocken
- 47: Mitnehmerbolzen
- 49: Mitnehmerklammer
- 51: Entriegelungstraverse
- 53: Entriegelungshebel
- 55: Entriegelungsschlaufe
- 61: Riegel
- 63: Zugfeder
- 65: Zapfen
- 67: Steuerscheibe
- 67': Absatz
- 69: Schwingenlagerbolzen
- 71: Verbindungshebel
- 75: Hochziehschlaufe

## Patentansprüche

1. Fahrzeugsitz, insbesondere Kraftfahrzeugsitz, mit einem gelenkigen Sitzgestell (3) und einer Lehnenstruktur (7), der unter Bewegung des Sitzgestells (3) und/oder der Lehnenstruktur (7) von einer Sitzstellung in eine Tischstellung und/oder eine Bodenstellung überführbar ist, wobei das Sitzgestell (3) einen vorderen Fußbereich (15, 17) und wenigstens eine Diagonalstrebe (31) aufweist, **dadurch gekennzeichnet, daß** die Diagonalstrebe (31) lösbar mit dem vorderen Fußbereich (15, 17) verriegelt ist.

2. Fahrzeugsitz nach Anspruch 1, **dadurch gekennzeichnet, daß** zum Übergang in die Bodenstellung die Diagonalstrebe (31) entriegelt wird und sich beim Übergang in die Bodenstellung vom vorderen Fußbereich (15, 17) entfernt.

3. Fahrzeugsitz nach Anspruch 2, **dadurch gekennzeichnet, daß** der vordere Fußbereich (15, 17) eine Führung (37) für die Bewegung der Diagonalstrebe (31) aufweist.

4. Fahrzeugsitz nach einem der Ansprüche 1 bis 3, **dadurch gekennzeichnet, daß** die verriegelte Diagonalstrebe (31) das Sitzgestell (3) formstabil hält.

5. Fahrzeugsitz nach einem der Ansprüche 1 bis 4, **dadurch gekennzeichnet, daß** auf jeder Seite des Fahrzeugsitzes (1) eine Diagonalstrebe (31) vorgesehen ist, wobei die beiden Diagonalstreben (31) durch wenigstens eine gemeinsame, horizontale Traverse (33, 35) miteinander verbunden sind.

6. Fahrzeugsitz nach einem der Ansprüche 1 bis 5, **dadurch gekennzeichnet, daß** zum Verriegeln der Diagonalstrebe (31) ein Sperrhaken (41) des vorderen Fußbereichs (15, 17) einen Bolzen und/oder eine Traverse (35) der Diagonalstrebe (31) wenigstens teilweise umgreift.

7. Fahrzeugsitz nach Anspruch 3 und 6, **dadurch gekennzeichnet, daß** der Bolzen und/oder die Traverse (35) der Diagonalstrebe (31) in der Führung (37) des vorderen Fußbereichs (15, 17) geführt ist.

8. Fahrzeugsitz nach Anspruch 6 oder 7, **dadurch gekennzeichnet, daß** der Sperrhaken (41) manuell über Entriegelungselemente (55, 53, 51, 49, 47, 45) vom Bolzen und/oder der Traverse (35) entfernbar ist.

9. Fahrzeugsitz nach einem der Ansprüche 1 bis 8, **dadurch gekennzeichnet, daß** das Sitzgestell (3) nach Entriegeln der Diagonalstrebe (31) flach zusammenfaltbar ist.
